# EUROPEAN PATENT APPLICATION

(11) **EP 1 280 041 A2**
(43) Date of publication of application: **29.01.2003**
(21) Application number: 02255219.4
(22) Date of filing: 26.07.2002
(51) Int. Cl.: G06F 1/00

(54) **Authentication for computer networks**

(30) Priority: 27.07.2001 GB 0118454
(71) Applicant: Hewlett-Packard Company, Palo Alto, CA 94304 (US)
(72) Inventor: Wray, Michael, Bath BA1 3NE (GB)
(74) Representative: Lawrence, Richard Anthony

(57) **Abstract**

A method to allow a user to authenticate himself on a server of which he does not know the domain name makes use of an authentication protocol which combines shared secret techniques with asymmetric techniques. A secure remote password can be used for a user (10) to authenticate to a server (12) using his secret password together with the hybrid protocol, SRP. The user (10) then authenticates a server (12) using the hybrid protocol. At the same time, the user signs one of the messages relayed to the server (12) using a public key. This server (12) then issues the user a name certificate, which contains the public key of the subject, the name being conferred on the subject in various administrative fields such as serial number, validity period etc. Subsequently, the user (10) can authenticate himself to the server using the name certificate only using standard PKI techniques.

## Description

This invention relates to a method of authentication on a computer network and to apparatus for authenticating a user on a computer network.

It is a known problem that designers and users of computer networks would like to use public key authentication to gain access to services offered on the world wide web. A problem arises with public key authentication because of the task of giving users access to the public and private key pairs needed for public key authentication. If users always use the same machine then they can install the key pairs on that machine. However, if users use several different machines it is not a practical solution to install the key pairs on one machine. This problem prevents the use of public key authentication as widely as would be desired. Also, where users share a machine, storing public and private keys on the machine may have security risks, because another user would have access to a first users keys.

One proposed solution to the above problem is the use of a user password over Transport Layer Security (TLS), the standard proposed by the Internet Engineering Task Force (IETF), see IETF Request for Comments (RFC) number 2246 (e.g. at www.ietf.org/rfc/rfc2246.txt). This has the disadvantage however of requiring the user to know the domain of the authentication server which he is trying to access and also requires the user to carefully check the site certificate if they do not want to disclose their password to an impostor. In addition, the server stores the user's password and might accidentally disclose it.

Furthermore, a TLS connection to the server is required, so the authentication server must reside in the target web server.

According to a first aspect of the present invention a method for a user to authenticate to a first computer on a computer network comprises:
a) a user authenticating himself to the first computer with a symmetric-type password unknown to the first computer and by means of a hybrid protocol; and
b) if the authentication is accepted the first computer then sends a digital certificate to the user, for subsequent use by the user to authenticate himself by means of the digital certificate to the first computer or other computers.

Preferably, the first computer authenticates the symmetric-type password using a verifier related to the symmetric-type password. Preferably, the verifier is a hash or derived from a hash of the symmetric-type password.

Preferably, a shared secret is created between the user and the first computer during the hybrid protocol.

Preferably, the shared secret is unrelated to the symmetric-type password.

The first computer may issue the digital certificate to the user based on a public key sent to the first computer by the user. The public key may be one generated by the user.

The digital certificate sent to the user may be one stored by the first computer for the user. In which case public and private keys for the certificate are preferably also sent to the user, most preferably in an encrypted form.

The hybrid protocol may be a secure remote password (SRP) protocol or may be Encrypted Key Exchange (EKE). The hybrid protocol may be a shared secret or symmetric authentication protocol.

The digital certificate may be a name certificate. The name certificate may be bound to a public key belonging to the user. The certificate may be an attribute certificate, such as a SPKI certificate, defining attributes of the subject rather than simply a name.

The user can advantageously authenticate himself to a web server without knowing the domain name of the server by use of the hybrid protocol such as SRP. Also, a standard connection can be used because a secure connection is not needed, given that the method results in the creation of a shared secret between the user and the first computer. Also, the user advantageously bootstraps from use of the hybrid protocol to use of the digital certificate alone.

The method may also include the user authenticating the first computer by means of the hybrid protocol.

Thus the user can advantageously be authenticated by the first computer and the first computer can be authenticated by the user.

The public key encryption preferably involves a public key being sent with the message. The public key for the message may be stored in a browser key store of a world wide web browser application run by the user. Alternatively the public key may be generated by the user for the purpose.

The first computer preferably functions in the same way as a standard certification authority (CA) functions for user's identities.

The method may include the user authenticating to the first computer in a subsequent session by means of the digital certificate combined with public key encryption. This authentication is preferably a standard authentication, similar to that used with a standard public key encryption certificate.

Thus the method advantageously provides a method whereby the user can be bootstrapped from the secret password and hybrid protocol to use of standard public key encryption by means of the name certificate bound to the public key.

Second or further computers, preferably operated independently from the first computer, on the computer network may authenticate the user by means of the name certificate, preferably relying on the name certificate to bind the user's name to a public key.

According to a second aspect of the present invention a recordable medium carries a computer program operable to perform the method of the first aspect.

The computer program may be in the form of an applet, which may be a signed applet.

According to a further aspect the invention extends to a computer operable to perform the method of the first aspect.

All of the features disclosed herein may be combined with any of the above aspects, in any combination.

A specific embodiment of the present invention will now be described, by way of example, and with reference to the accompanying drawings in which:
Figure 1 is a schematic flow diagram of the steps required for a user to authenticate himself on a computer server; and
Figure 2 is a schematic diagram of the relationship between a user and a server.

A method to allow a user to authenticate himself on a server of which he does not know the domain name makes use of a new class of authentication protocols, generally termed hybrid authentication protocols or simply hybrid protocols. A hybrid protocol combines two techniques - a shared secret or symmetric technique is combined with an asymmetric technique, such as Diffie-Hellman key exchange. One example of the hybrid authentication protocols is encrypted key exchange (EKE) - see e.g. S. M. Bellovin and M. Merritt,Encrypted Key Exchange: Password-Based Protocols Secure Against Dictionary Attacks", Proceedings of the 1992 IEEE Computer Society Conference on Research in Security and Privacy, May 1992. Another example is a secure remote password (SRP). SRP is discussed in IETF RFC2945 (see e.g. www.ietf.org/rfc/rfc2945.txt or T. Wu, The Secure Remote Password Protocol, in Proceedings of the 1998 Internet Society Network and Distributed System Security Symposium, San Diego, CA, Mar 1998, pp. 97-111).

SRP allows a user who has only a secret password to authenticate himself to a server and optionally to authenticate the server itself. The secret password is a symmetric-type password, which once known can be used to access the server. As part of the authentication a shared secret is created using a Diffie-Hellman key exchange. The shared secret is independent of the secret password and the protocol reveals no information about the password to either party or an observer. SRP also has the advantage that the server does not need to have the password itself, but only a verifier derived from the password. The verifier is an exponential of a hash of the password. A cryptographic hash function is a mechanism of generating a unique identifier (usually called the hash) from a document (usually 128 bits and longer). They have the property that it is extremely unlikely that two documents will generate the same hash. It is also extremely hard to generate the document from the hash. This means that it is hard to generate a different document that has the same hash as a given document. An analogy that is often used is that it is the fingerprint of the data. There are several well-known hash algorithms documented in the literature that will be known to anybody skilled in the art. These include SHA-1 and MD5.

The password may be vulnerable to a dictionary attack on the verifier, i.e. by applying random potential passwords to achieve success. Nevertheless, the password is not directly revealed by the verifier, which provides a second line of defence against disclosure of the verifier, either by accident or by theft.

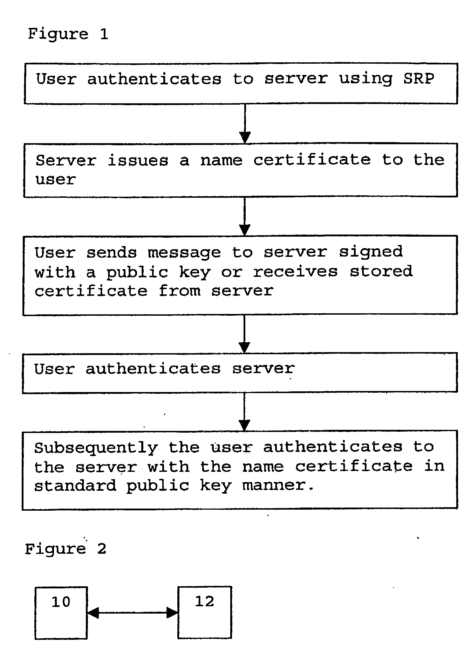

Referring to Figure 2, SRP (and also EKE) can be used for a user 10 to authenticate to a server 12 using his secret password and a hybrid protocol such as SRP. The user 10 then authenticates the server 12 using the hybrid protocol. At the same time, the user 10 signs one of the messages relayed to the server 12 using a public key. The server 12 then issues the user a name certificate. A name certificate is a public-key certificate signed by the public key of an issuing authority. It contains the public key of the subject, the name being conferred on the subject and various administrative fields such as a serial number, validity period, algorithm identifiers and so on. A common form of name certificate is defined in the X.509 standard. The name certificate for their authenticated identity is bound to the public key in the user's signature, either by recording the authenticated identity in a database or by issuing a certificate.

After this authentication, the user can use his public key to authenticate himself to services on web servers or the like using standard public key encryption techniques, such as TLS with client authentication and the identity certificate.

Alternatively, the user's key pair and certificate may be stored by the authenticating server, in which case the user does not sign a message with his public key, but receives the key pair and certificate from the server when he authenticates. The key pair is preferably in encrypted form. The name certificate is issued in the same way, but in this example is bound to the user's public key provided to the user by the server.

In the above, the authentication server functions as a certification authority (CA) for the user's identity.

If other web servers wish to make the user 10 the subject of certificates they use the user's name, relying on the name certificate to bind the name to a key. Services provided for example from web servers record the authenticating server in their set of CA's, so that they will accept name certificates from that authenticating server. Such an example is easily extended to cover numerous different authentication servers which are trusted by the server 12, and which can all carry out the authentication separately and will accept the authentication performed by another of those servers.

SRP protocol messages are self protecting, because they only relate to the password or shared secret but do not disclose it, so there is no need for a secure communications channel between the user 10 and the authentication server 12. This means that the user 10 does not need a direct socket to the server 12 (as he would for secure socket layer protocol (SSL)/TLS), so that the server 12 can be implemented in the form of a servlet.

A servlet is a self-contained piece of code (typically Java) that can be run by a webserver to implement a service or other remote process without a direct connection. Since SRP authenticates the server 12 as well as the user 10, the user 10 can discover the server dynamically, and does not need to use a server at a constant address, as would have previously been the case.

The method described above allows services to use public key encryption everywhere, without the problems discussed above relating to initial authentication of the user 10.

Popular web browsers have support for key generation and storage. The SRP protocol is relatively simple, and so can be implemented using the Java language using standard facilities (only bignum and hash are needed). SRP uses modular integer arithmetic and a cryptographically strong hash function. In order to be usable for security purposes the modulus must be much bigger than machine arithmetic can support - so a multi-word arithmetic packagem, or bignum package is needed. Both bignums and cryptographically strong hash (such as SHA-1) are standard in Java.

It would be straightforward to download the implementation to a user's browser as a signed applet. An applet is a piece of code (typically in Java or JavaScript) that can be downloaded from a server into a client's web-browser for execution. In the context of security it is obviously important to be able to trust that the code is correct, hence the need for it to be signed. This means that SRP can be used to bootstrap a user from a password to a public key without making any changes to their browser.

Once the user has bootstrapped they can continue to use the public key and certificate until it expires. Only the authentication server needs to participate in SRP, other services can use standard public key encryption (such as SSL/TLS), treating the authentication server as a CA and identifying the user account by the name used in the identity certificate. The authentication server can use standard CA products to issue identity certificates, e.g. the Baltimore Unicert product for X.509 certificates.

The method disclosed herein solves the problems associated with users using different devices, or users using shared devices. The users authenticate to a server, which issues them an identity certificate, possibly only valid for a short time, e.g. a day or a week. All authorisation is driven from the identity in the identity certificate (not the public key). This feature also reduces the problem of a Trojan Horse attack being installed on a machine by an attacker that might pick up the keys/certificates. The certificates and keys could have very short validity (even one time), and there is no reason why the browser or plug-in needs to store the certificates and keys on disk, where they could be picked up by the Trojan Horse mentioned above. However, unless the browser used by the user was modified, it would probably store the keys and certificates on the hard disk.

With the method, a user only needs his password, which he may remember, to initially authenticate himself and bootstrap up to a public key for full authentication.

A further feature of the method is that a session key (a shared secret established between parties by a protocol used for the duration of the session and then discarded) established by SRP could also be used to download the user's permanent public keys and certificates from the server, instead of issuing a name certificate.

The method disclosed above provides an advantageous solution to the problem of a user who does not use the same machine but wishes to authenticate himself with a server, or for a user who shares a machine with other users and does not wish to store passwords, public/private key pairs and certificates on that machine, for obvious security reasons.

## Claims

1. A method for a user (10) to authenticate to a first computer (12) on a computer network comprises:
a) a user (10) authenticating himself to the first computer (12) with a symmetric-type password unknown to the first computer (12) and by means of a hybrid protocol; and
b) if the authentication is accepted the first computer (12) then sends a digital certificate to the user (10), for subsequent use by the user (10) to authenticate himself by means of the digital certificate to the first computer (12) or other computers.

2. A method as claimed in claim 1, wherein the first computer (12) authenticates the symmetric-type password using a verifier related to the symmetric-type password.

3. A method as claimed in claim 2, in which the verifier is a hash or derived from a hash of the symmetric-type password.

4. A method as claimed in any preceding claim, in which a shared secret is created between the user (10) and the first computer (12) during the hybrid protocol.

5. A method as claimed in claim 4, in which the shared secret is unrelated to the symmetric-type password.

6. A method of authentication as claimed in any preceding claim, in which the first computer (12) issues the digital certificate to the user (10) based on a public key sent to the first computer (12) by the user (10).

7. A method of authentication as claimed in claim 6, in which the public key is generated by the user (10).

8. A method of authentication as claimed in any preceding claim, in which the digital certificate sent to the user (10) is one stored by the first computer (12) for the user (10).

9. A method of authentication as claimed in claim 8, in which public and private keys for the digital certificate are also sent to the user (10) in encrypted form.

10. A method of authentication as claimed in any preceding claim, in which the hybrid protocol is a secure remote password (SRP) protocol or an Encrypted Key Exchange (EKE) protocol.

11. A method of authentication as claimed in any preceding claim, in which the certificate is an attribute certificate, such as a SPKI certificate defining attributes of the subject.

12. A method of authentication as claimed in any preceding claim, in which the method includes the user (10) authenticating to the first computer (12) in a subsequent session by means of a digital certificate combined with public key encryption.

13. A method of authentication as claimed in any preceding claim, in which second or further computers, on a computer network authenticate the user (10) by means of a name certificate, relying on a name certificate to bind the user's name to a public key.

14. A recordable medium carrying a computer program operable to perform the method of any one of claims 1 to 13.

15. A computer (12) operable to perform the method of any one of claims 1 to 13.
